# EUROPÄISCHE PATENTSCHRIFT

(11) **EP 1 592 105 B1**
(45) Veröffentlichungstag und Bekanntmachung des Hinweises auf die Patenterteilung: **28.10.2009**
(21) Anmeldenummer: 05002569.1
(22) Anmeldetag: 08.02.2005
(51) Int. Cl.: H02H 7/12

(54) **Schutzschaltung für einen Umrichter**
Protection circuit for a converter
Circuit de protection d'un convertsisseur

(30) Priorität: 26.04.2004 DE 102004020521; 19.05.2004 DE 102004024933
(43) Veröffentlichungstag der Anmeldung: 02.11.2005
(73) Patentinhaber: Dr. Johannes Heidenhain GmbH, 83292 Traunreut (DE)
(72) Erfinder: Huber, Norbert, 83317 Teisendorf (DE); Graf, Simon, 84508 Burgkirchen (DE)

(56) Entgegenhaltungen:
- EP-A- 0 477 367
- EP-A- 1 176 688
- US-A- 5 726 849

## Beschreibung

Die Erfindung betrifft eine Schutzschaltung für einen Umrichter.

Ein Umrichter dient zum Umwandeln von Wechselstrom fester Frequenz, wie er beispielsweise aus einem Versorgungsnetz entnommen wird, in einen Wechselstrom variabler Frequenz, zum Betreiben eines Motors.

Ein Umrichter weist eine Gleichrichterschaltung, einen nachgeschalteten Zwischenkreis mit einem Zwischenkreiskondensator und einen nachgeschalteten Wechselrichter auf.

Beim Einschalten des Umrichters muss zunächst der Zwischenkreiskondensator geladen werden. Dabei können sehr hohe Ströme fließen, wenn nicht geeignete Maßnahmen zur Begrenzung dieser Ströme getroffen werden. Der Zwischenkreiskondensator wirkt nämlich im ungeladenen Zustand wie ein Kurzschluss.

Es werden daher Ladewiderstände verwendet, die den Ladestrom begrenzen. Erst nach einer zumindest weitgehend vollständigen Ladung des Zwischenkreiskondensators können diese Ladewiderstände überbrückt werden.

Eine solche Schaltungsanordnung ist aus EP 1 176 688 bekannt.

Bereits während des Ladevorganges wird der Ladestrom immer kleiner, wenn sich der Zwischenkreiskondensator kontinuierlich auflädt.

Um das Aufladen des Zwischenkreiskondensators möglichst schnell zu erledigen, sollen die Ladewiderstände möglichst klein dimensioniert sein. Sie erlauben damit unter Umständen Ströme, die eine recht hohe Verlustleistung in den Widerständen erzeugen können.

Am Ende des Ladevorganges wird üblicherweise überprüft, ob der Zwischenkreis seine Sollspannung erreicht hat. In diesem Fall werden die Ladewiderstände überbrückt, andernfalls wird der Umrichter vom Versorgungsnetz genommen bzw. abgeschaltet.

Lässt sich der Zwischenkreis nicht laden, da ein Zwischenkreiskurzschluss oder ein hoher Entladestrom vorliegt, so bedeutet dies, dass die Ladewiderstände eine deutlich größere Verlustleistung verkraften müssen, bzw. dass die Ladewiderstände durchbrennen.

Aufgabe der Erfindung ist es, eine einfache und kostengünstige Schaltung anzugeben, die die Ladewiderstände zur Ladung der Zwischenkreiskondensatoren schützt und damit eine optimale Dimensionierung dieser Ladewiderstände erlaubt.

Diese Aufgabe wird gelöst durch eine Vorrichtung mit den Merkmalen des Anspruches 1.

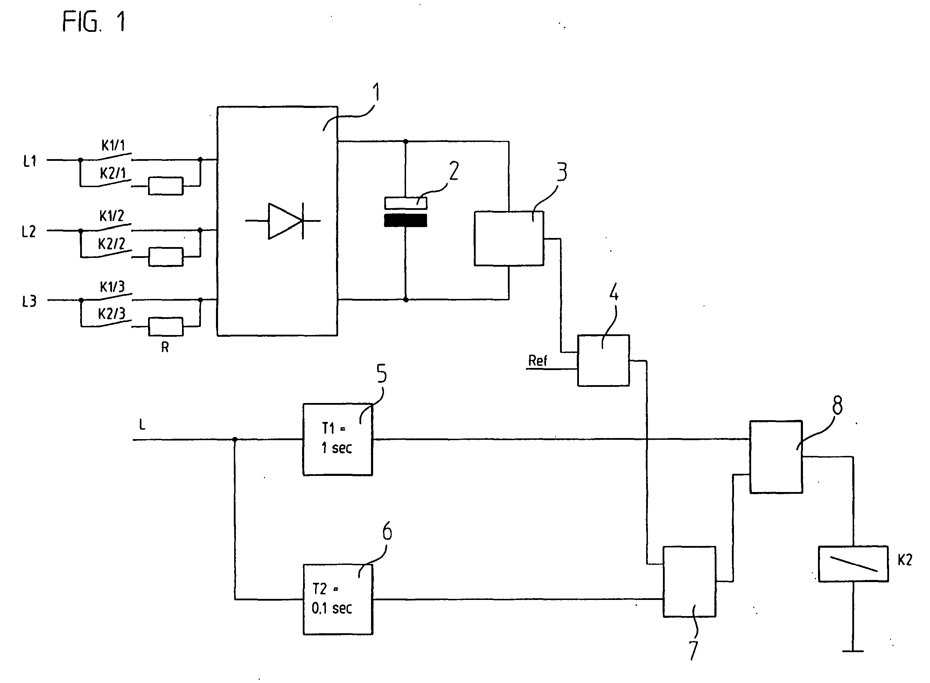

Weitere Vorteile sowie Einzelheiten der vorliegenden Erfindung ergeben sich aus der nachfolgenden Beschreibung einer bevorzugten Ausführungsform anhand der Figur. Dabei zeigt
- Figur 1: eine Schutzschaltung für einen Umrichter.

In Figur 1 ist dargestellt, dass die Phasen L1, L2, L3 eines Versorgungsnetzes über erste Schaltmittel K1/1, K1/2, K1/3 unmittelbar mit einem Gleichrichter 1 verbunden sind. Über zweite Schaltmittel K2/1, K2/2, K2/3 ist das Versorgungsnetz über Ladewiderstände R mit dem Gleichrichter 1 verbunden.

Dem Gleichrichter 1 nachgeschaltet ist der Zwischenkreis mit seinem Zwischenkreiskondensator 2. Der nachfolgende Wechselrichter und der daran angeschlossene Motor ist in Figur 1 nicht dargestellt.

Zum Laden des Zwischenkreiskondensators 2 werden die zweiten Schaltmittel K2/1,K2/2, K2/3 geschlossen. Die Erfindung macht sich zunutze, dass zu Beginn einer Widerstandsladung die Zwischenkreisspannung nach einer e - Funktion ansteigt. Die Aufladung erfolgt zunächst sehr schnell und dann immer langsamer. Nachdem die Zwischenkreisspannung ca. 87% der endgültigen Spannung erreicht hat, schwächt sich die Ladekurve weiter ab, da bei der Netzgleichrichtung eine Rippelspannung entsteht und die Ladung am Ende hinaus nur noch während der Spannungsmaxima erfolgt. Schon nach kurzer Zeit hat der Zwischenkreis also eine recht hohe Spannung erreicht, z.B. die Hälfte seiner Betriebsspannung. Diesen charakteristischen Verlauf der Zwischenkreisspannung macht sich die Erfindung zunutze, indem sie den Verlauf bereits zu einem sehr frühen Zeitpunkt kontrolliert und den Ladevorgang nur dann vorsetzt, wenn die Zwischenkreisspannung bis dahin einen Referenzwert erreicht hat.

Die Schutzschaltung besteht nun aus folgenden Elementen, deren Verschaltung auch der Figur 1 entnommen werden kann:

Eine Spannungsmessschaltung 3 gibt ein der Zwischenkreisspannung proportionales Signal an einen Komparator 4 ab, der die Zwischenkreisspannung mit einer Referenzspannung Ref vergleicht.

An einem Eingang der Schutzschaltung ist ein Ladesignal L anlegbar, das den Ladevorgang startet. Dieses Ladesignal L triggert ein erstes Monoflop 5 und ein zweites Monoflop 6. Die erste Zeitkonstante T1 des ersten Monoflops 5 ist so groß gewählt, dass im Normalfall nach Ablauf dieser Zeitkonstante der Zwischenkreiskondensator 2 nahezu vollständig geladen ist. Typische Werte sind T1 = 1 Sekunde, während der sich der Zwischenkreiskondensator 2 auf ca. 565 Volt auflädt. Die zweite Zeitkonstante T2 des zweiten Monoflops ist so gewählt, dass der Zwischenkreis bereits eine gewisse Spannung erreicht hat. Typische Werte sind T2 = 0.1 Sekunde, während der sich der Zwischenkreiskondensator 2 auf ca. 200 Volt auflädt. Zu diesem Zeitpunkt T2 nach Beginn der Aufladung wird die Ladekurve also bereits überprüft und dadurch eine schnelle Reaktion auf einen möglichen Fehler ermöglicht.

Die Ausgänge des Komparators 4 und des zweiten Monoflops 6 sind mit den Eingängen eines ODER-Verknüpfers 7 verbunden. Dieser ODER-Verknüpfer 7 gibt nur dann ein Schaltsignal ab, wenn entweder seit dem Ladesignal L nicht mehr als die Zeitkonstante T2 des zweiten Monoflops 6 vergangen ist, und/oder die Zwischenkreisspannung über der Referenzspannung Ref liegt.

Der Ausgang des ersten Monoflops 5 ist zusammen mit dem Ausgang des ODER-Verknüpfers 7 mit den Eingängen eines UND-Verknüpfers 8 verbunden, dessen Ausgang das zweite Schaltmittel K2 ansteuert.

Die Schaltung bewirkt also, dass die zweiten Schaltmittel K2 nach dem auftreten eines Ladesignals L geschlossen werden und ein Ladevorgang gestartet wird (K2 wird geschlossen). Erreicht die Zwischenkreisspannung nach Ablauf der Zeitkonstante T2 des zweiten Monoflops 6 die Referenzspannung Ref, so bleiben die zweiten Schaltmittel K2 geschlossen (Wegen des ODER-Verknüpfers 7), und der Ladevorgang wird fortgesetzt.

Der UND-Verknüpfer 8 beendet den Ladevorgang entweder bereits nach Ablauf der zweiten Zeitkonstanten T2 des zweiten Monoflops 6 (nämlich wenn bis dann die Referenzspannung Ref nicht erreicht wurde) oder spätestens nach Ablauf der ersten Zeitkonstanten T1 des ersten Monoflops 5. Dies wird durch den UND-Verknüpfer 8 erreicht.

Nach erfolgreichem Abschluss des Ladevorganges können die ersten Schaltmittel K1/1, K1/2, K1/3, etwa ein Hauptschütz, geschlossen werden. Hierzu kann es ratsam sein, das Erreichen der vollen Betriebsspannung des Zwischenkreises mit einer weiteren Schutzschaltung zu überprüfen.

Die Schutzschaltung bewirkt also durch die Überwachung der Zwischenkreisspannung, dass ein Fehlschlagen des Ladevorganges zu einem sehr frühen Zeitpunkt erkannt werden kann und der Ladevorgang rechtzeitig abgebrochen werden kann.

### Anhang

- Rechenbeispiel:: Netzspannung 3 x 400 V~
Zwischenkreisspannung 565 V=
Zwischenkreiskapazität 2 mF
Ladewiderstände 3 x 10 Ohm
Verlustenergie in den Widerständen 1/2CU² = 319 Ws
(bei fehlerfreier Aufladung des Zwischenkreises)

Bei einem Kurzschluss im Zwischenkreis ergäbe sich bei einer maximalen Ladezeit von einer Sekunde eine Verlustenergie von 3 x ((230 V)² / 10 Ohm) = 15870 Ws.

Bei Anwendung der Erfindung ergibt sich bei einem Ladeabbruch nach 0,1 Sekunde eine Verlustenergie von 15870*0,1 = 1587 Ws.

## Patentansprüche

1. Schutzschaltung für einen Umrichter, mit der eine Spannung eines Zwischenkreiskondensators (2) während eines Ladevorgangs überwachbar ist, wobei bei Nichterreichen einer Referenzspannung (Ref), die deutlich unterhalb einer Betriebsspannung des Zwischenkreiskondensators (2) liegt, der Ladevorgang beendbar ist, **dadurch gekennzeichnet, dass** die Schutzschaltung ein erstes Monoflop (5) mit einer ersten Zeitkonstanten (T1) und ein zweites Monoflop (6) mit einer zweiten Zeitkonstante (T2) aufweist, deren Eingänge jeweils mit einem Ladesignal (L) verbunden sind.

2. Schutzschaltung nach Anspruch 1, **dadurch gekennzeichnet, dass** die Referenzspannung (Ref) kleiner als die Hälfte der Betriebsspannung ist.

3. Schutzschaltung nach Anspruch 1 oder 2, **dadurch gekennzeichnet, dass** die zweite Zeitkonstante (T2) deutlich kleiner ist als die erste Zeitkonstante (T1).

4. Schutzschaltung nach Anspruch 1, 2 oder 3, **dadurch gekennzeichnet, dass** die Ausgänge des ersten und zweiten Monoflops (5, 6) so mit zweiten Schaltmitteln (K2) zum Laden des Zwischenkreiskondensators (2) über Ladewiderstände (R) verknüpft sind, dass der Ladevorgang für die Dauer der zweiten Zeitkonstante (T2) nach Auftreten des Ladesignals (L) ohne weitere Bedingung abläuft.

5. Schutzschaltung nach Anspruch 4, **dadurch gekennzeichnet, dass** die Ausgänge des ersten und zweiten Monoflops (5, 6) so mit den zweiten Schaltmitteln (K2) verknüpft sind, dass der Ladevorgang nach Ablauf der zweiten Zeitkonstanten (T2) nur dann bis zum Ablauf der ersten Zeitkonstanten (T1) fortgesetzt wird, wenn die Spannung des Zwischenkreiskondensators (2) oberhalb der Referenzspannung (Ref) liegt.

6. Schutzschaltung nach Anspruch 5, **dadurch gekennzeichnet, dass** die Spannung des Zwischenkreiskondensators (2) und die Referenzspannung (Ref) an einem Komparator (4) anliegen, dessen Ausgang zusammen mit dem Ausgang des zweiten Monoflops (6) an den Eingängen eines ODER-Verknüpfers (7) anliegen.

7. Schutzschaltung nach Anspruch 6, **dadurch gekennzeichnet, dass** der Ausgang des ODER-Verknüpfers (7) und der Ausgang des ersten Monoflops (5) an den Eingängen eines UND-Verknüpfers (8) anliegen, dessen Ausgang die zweiten Schaltmittel (K2) ansteuert.

8. Schutzschaltung nach einem der vorhergehenden Ansprüche, **dadurch gekennzeichnet, dass** nach Ablauf der ersten Zeitkonstante (T1) das Erreichen der Betriebsspannung des Zwischenkreiskondensators (2) überprüfbar ist.

## Claims

1. A protective circuit for a converter by means of which a voltage of a link capacitor (2) can be monitored during a charging process, wherein the charging process can be terminated in the event that a reference voltage (Ref), which clearly lies below an operating voltage of the link capacitor (2), is not reached, **characterized in that** the protective circuit encompasses a first mono-stable trigger circuit (5) comprising a first time constant (T1) and a second mono-stable trigger circuit (6) comprising a second time constant (T2), the inputs of which are in each case connected to a charge signal (L).

2. The protective circuit according to claim 1, **characterized in that** the reference voltage (Ref) is less than half of the operating voltage.

3. The protective circuit according to claim 1 or 2, **characterized in that** the second time constant (T2) is considerably less than the first time constant (T1).

4. The protective circuit according to claim 1, 2 or 3, **characterized in that** the outputs of the first and second mono-stable trigger circuit (5, 6) are linked with second switching means (K2) for charging the link capacitor (2) via charging resistors (R) in such a manner that the charging process runs without further condition for the duration of the second time constant (T2) after the appearance of the charge signal (L).

5. The protective circuit according to claim 4, **characterized in that** the outputs of the first and second mono-stable trigger circuits (5, 6) are linked with the second switching means (K2) in such a manner that the charging process after the termination of the second time constant (T2) is continued until the termination of the first time constant (T1) only in the event that the voltage of the link capacitor (2) lies above the reference voltage (Ref).

6. The protective circuit according to claim 5, **characterized in that** the voltage of the link capacitor (2) and the reference voltage (Ref) are applied to a comparator (4), the output of which together with the output of the second mono-stable trigger circuit (6) is applied to the inputs of an OR linker (7).

7. The protective circuit according to claim 6, **characterized in that** the output of the OR linker (7) and the output of the first mono-stable trigger circuit (5) are applied to the inputs of an AND linker (8), the output of which controls the second switching means (K2).

8. The protective circuit according to one of the preceding claims, **characterized in that** the attainment of the operating voltage of the link capacitor (2) can be verified after termination of the first time constant (T1).

## Revendications

1. Circuit de protection pour un convertisseur, avec lequel une tension d'un condensateur de circuit intermédiaire (2) peut être surveillée pendant un procédé de charge, le procédé de charge pouvant être arrêté lorsque une tension de référence (Ref) nettement inférieure à la tension de service du condensateur de circuit intermédiaire (2) n'est pas atteinte, **caractérisé en ce que** le circuit de protection comporte un premier basculeur (5) avec une première constante de temps (T1) et un deuxième basculeur (6) avec une deuxième constante de temps (T2), dont les entrées sont reliées chacune à un signal de charge (L).

2. Circuit de protection selon la revendication 1, **caractérisé en ce que** la tension de référence (Ref) est inférieure à la moitié de la tension de service.

3. Circuit de protection selon l'une des revendications 1 ou 2, **caractérisé en ce que** la deuxième constante de temps (T2) est nettement inférieure à la première constante de temps (T1).

4. Circuit de protection selon l'une des revendications 1, 2 ou 3, **caractérisé en ce que** les sorties du premier et du deuxième basculeur (5, 6) sont reliées de telle manière à des deuxièmes moyens de commutation (K2) pour la charge d'un condensateur de circuit intermédiaire (2) par des résistances de charges (R), que le procédé de charge se déroule sans autre condition pour la durée de la deuxième constante de temps (T2) après l'apparition du signal de charge (L).

5. Circuit de protection selon la revendication 4, **caractérisé en ce que** les sorties du premier et du deuxième basculeur (5, 6) sont reliées de telle manière aux deuxièmes moyens de commutation (K2), qu'après la fin de la deuxième constante de temps (T2), le procédé de charge n'est poursuivi jusqu'à la fin de la première constante de temps (T1) que lorsque la tension du condensateur de circuit intermédiaire (2) est supérieure à la tension de référence (Ref).

6. Circuit de protection selon la revendication 5, **caractérisé en ce que** la tension du condensateur de circuit intermédiaire (2) et la tension de référence (Ref) s'appliquent à un comparateur (4), dont la sortie s'applique, ensemble avec la sortie du deuxième basculeur (6), aux entrées d'un combinateur OU (7).

7. Circuit de commutation selon la revendication 6, **caractérisé en ce que** la sortie du combinateur OU (7) et la sortie du premier basculeur (5) sont appliquées aux entrées d'un combinateur ET (8), dont la sortie actionne les deuxièmes moyens de commutation (K2).

8. Circuit de protection selon l'une des revendications précédentes, **caractérisé en ce qu'**après la fin de la première constante de temps (T1), l'atteinte de la tension de référence du condensateur de circuit intermédiaire (2) est vérifiable.
